# EUROPÄISCHE PATENTSCHRIFT

(11) **EP 1 212 844 B1**
(45) Veröffentlichungstag und Bekanntmachung des Hinweises auf die Patenterteilung: **08.10.2003**
(21) Anmeldenummer: 00991130.6
(22) Anmeldetag: 28.12.2000
(51) Int. Cl.: H04B 1/707

(54) **DETEKTIONSVERFAHREN UND -VORRICHTUNG IN EINEM CDMA SYSTEM**
DETECTION METHOD AND DEVICE
PROCEDE ET DISPOSITIF DE DETECTION

(30) Priorität: 28.01.2000 DE 10003734
(43) Veröffentlichungstag der Anmeldung: 12.06.2002
(73) Patentinhaber: ROBERT BOSCH GMBH, 70442 Stuttgart (DE)
(72) Erfinder: HANS, Martin, 31141 Hildesheim (DE); KOWALEWSKI, Frank, 38220 Salzgitter (DE); LAUMEN, Josef, 31141 Hildesheim (DE); SCHMIDT, Gunnar, 38304 Wolfenbuettel (DE); BAER, Siegfried, 75179 Pforzheim (DE); BECKMANN, Mark, 31789 Hameln (DE)
(86) Internationale Anmeldenummer: DE0004672
(87) Internationale Veröffentlichungsnummer: WO01056162

(56) Entgegenhaltungen:
- WO-A-01/24395
- WO-A-99/03225
- HASANUDIN H ET AL: "REDUCING SWITCH DELAY BY RECONSTRUCTION OF TREE STRUCTURED ORTHOGONAL CODES IN CDMA MOBILE SWITCHING SYSTEM" WORKSHOP NOTES. IEEE INTERNATIONAL WORKSHOP ON INTELLIGENT SIGNAL PROCESSING AND COMMUNICATION SYSTEM, XX, XX, 8. Dezember 1999 (1999-12-08), Seiten 585-588, XP001012004

## Beschreibung

### STAND DER TECHNIK

Die vorliegende Erfindung betrifft ein Detektionsverfahren, bei dem ein CDMA-codiertes Datensignal in Form eines Datenstroms von aufgespreizten Datenbursts zwischen einem Sender und einem Empfänger übertragen wird, wobei hierarchische CDMA-Codes zur Übertragung verwendet werden sowie eine entsprechende Detektionsvorrichtung.

Obwohl prinzipiell auf beliebige Datenübertragungen anwendbar, werden die vorliegende Erfindung sowie die ihr zu Grunde liegende Problematik in Bezug auf ein zelluläres CDMA-Detektionssystem (CDMA = Code Division Multiple Access) erläutert.

Insbesondere lassen sich durch Code-Vielfachzugriff (CDMA = Code Division Multiple Access) mehrere Datenströme gleichzeitig über ein gemeinsames Frequenzband übertragen. Dabei werden die zu übertragenden Symbole der Datenströme mit sogenannten Spreizungscodes in Signalstücke der Länge der Spreizungscodes umgerechnet. Die Signalstücke der Datensymbole eines Zeitpunktes werden summiert, und die summierten Stücke werden entsprechend ihrer zeitlichen Reihenfolge versendet, wie aus K. D. Kammeyer, Nachrichtenübertragung, 2. Aufl., Reihe Informationstechnik, Teubner, Stuttgart, 1996 bekannt.

Aus den empfangenen Signalstücken lassen sich die Datensymbole der Datenströme durch Entspreizung mit den Spreizungscodes wieder zurückgewinnen. Bei Übertragung der Signale über mehrere Pfade (wie z.B. beim Mobilfunk) ist es vorteilhaft, die Entspreizung für alle Pfade getrennt vorzunehmen und die entspreizten Signale aller Pfade gewichtet (mit den Koeffizienten der Kanalimpulsantwort) aufzusummieren. Ein so funktionierender CDMA-Empfänger heißt Rake-Empfänger.

Durch die Mehrwegeübertragung entstehen am Empfänger gegenseitige Störungen der übertragenen Signale. Im Gegensatz zum Rake-Empfänger können diese Störungen z.B. durch gemeinsame Detektion (JD = Joint Detection) im Empfänger eliminiert werden, wie-aus A. Klein, G.K. Kaleh und P.W. Baier: "Zero Forcing and Minimum Mean-Square-Error Equalization for Multiuser Detection in Code-Division MultipleAccess Channels", IEEE Trans. Vehic. Tech., Bd. 45 (1996), 276-287 bekannt.

CDMA-Codes mit großem Spreizungsfaktor lassen sich aus zwei Codes mit kleinerem Spreizungsfaktor durch Kronecker-Multiplikation konstruieren. Eine Menge so konstruierter CDMA-Codes heißt hierarchisch. Die im UMTS (UMTS = Universal Mobile Telephone System) verwendeten OVSF-Codes (OVSF = Orthogonal Variable Spreading Factor) sind hierarchisch konstruierte Codes (siehe Concept Group Alpha: "EVALUATION DOCUMENT (DRAFT 1.0), Part 1", ETSI Tdoc SMG2 270/97).

Weiterhin ist es bekannt, dass die empfangenen CDMA-Signale zunächst mit geringerem als nötigen Spreizfaktor detektiert werden und anschließend mit den zur Konstruktion des hierarchischen Codes verwendeten Codes entspreizt werden.

Große Spreizungsfaktoren ermöglichen die Nutzung sehr vieler Codes. Die Detektion sehr vieler Codes ist sehr aufwendig.

Aus der WO 01/24395 A1 ist ein Datenübertragungsverfahren bekannt, bei dem ein CDMA-codiertes Datensignal in Form eines Datenstroms von aufgespreizten Datenbursts zwischen einem Sender und einem Empfänger übertragen wird, wobei hierarchische CDMA-Codes zur Übertragung verwendet werden. In einem ersten Schritt werden gespreizte Daten entsprechend einem Muttercode des bzw. der Empfangscodes detektiert. In einem zweiten Schritt werden die delektierten Daten durch Entspreizung mit dem bzw. den Generatoren entspreizt. In einem dritten Schritt wird der Detektionsprozess abgebrochen, falls die Daten weit genug entspreizt sind, oder andernfalls wird der zweite Schritt mit den zuletzt entspreizten Daten solange wiederholt, bis die Daten weit genug entspreizt sind.

Aus der WO 99/03225 ist eine zweistufige Entspreizung von Empfangsdaten bekannt.

### Vorteile der Erfindung

Die der vorliegenden Erfindung zu Grunde liegende Idee besteht darin, dass die Codes schrittweise detektiert werden. Zuerst werden Codes mit kleinem Spreizungsfaktor detektiert. Die so gewonnenen

Ergebnisse werden dann bei der Detektion von Codes mit größerem Spreizungsfaktor verwendet. So muss nur ein Teil des gesamten Codebaums detektiert werden, da nur die entspreizten Signale vorhandener Codes an die nächste Stufe weitergegeben werden. Das Vorhandensein wird zweckmäßigerweise dadurch festgestellt, dass die Leistung der Codes eine bestimmte Schwelle überschreiten.

Das erfindungsgemäße Detektionsverfahren mit den Merkmalen des Anspruches 1 bzw. die Detektionsvorrichtung nach Anspruch 6 weisen den besonderen Vorteil auf, dass sie eine Detektion hierarchischer Codes mit geringerem Aufwand ermöglichen.

In den Unteransprüchen finden sich vorteilhafte Weiterbildungen und Verbesserungen des in Patentanspruch 1 angegebenen erfindungsgemäßen Verfahrens.

Gemäß einer bevorzugten Weiterbildung wird im ersten Schritt der Muttercode c^{(1,1)} mit dem Spreizungsfaktor 1 detektiert.

Gemäß einer weiteren bevorzugten Weiterbildung wird nur ein Teil des gesamten Codebaums detektiert.

Gemäß einer weiteren bevorzugten Weiterbildung werden OVSF-Codes detektiert.

Gemäß einer weiteren bevorzugten Weiterbildung erfolgt das Berücksichtigen des jeweils vorhergehenden Schritts dadurch, daß die Leistungen der bereits entspreizten CDMA-Signale bestimmt werden und nur die bereits entspreizten CDMA-Signale zum nächsten Schritt weitergeleitet werden, welche eine vorbestimmte Leistungsschwelle überschreiten.

### ZEICHNUNGEN

Ein Ausführungsbeispiel der Erfindung ist in der Zeichnung dargestellt und wird in der folgenden Beschreibung näher erläutert.

Es zeigen:
- Figur 1: eine Darstellung eines hierarchischen CodeBaumes zur Erläuterung einer Ausführungsform der Erfindung;
- Figur 2: ein Blockdiagramm einer Vorrichtung zur Detektion hierarchisch codierter CDMA-Signale gemäß einer Ausführungsform der vorliegenden Erfindung; und
- Fig. 3: eine schematische Darstellung des Aufbaus der Code-Detektoren bei der Ausführungsform der vorliegenden Erfindung nach Fig. 2.

### BESCHREIBUNG DER AUSFÜHRUNGSBEISPIELE

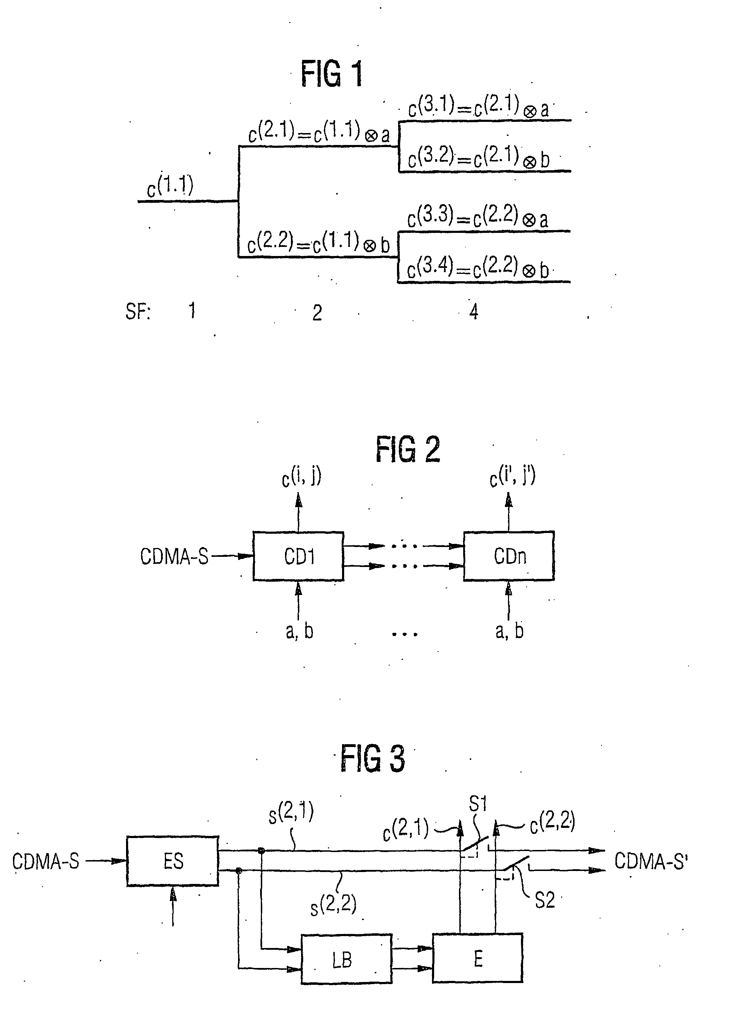

Fig. 1 zeigt die Konstruktion hierarchischer Codes. In Fig. 1 bezeichnen SF den Spreizungsfaktor und **c**^{(i,j)} die zugehörigen Spreizungscodes.

Durch Kronecker-Multiplikation mit den Generatoren a, b werden aus einem gegebenen Code **c**^{(i,j)} mit kleinerem SF Codes **c**^{(i+1,k)} mit größerem SF gebildet.

Der Aufbau hierarchischer Codes erlaubt es, hierarchisch gespreizte Daten iterativ durch eine entsprechende "inverse Kronecker-Multiplikation" im Empfänger zu entspreizen.

Beim vorliegenden Beispiel erfolgt eine CDMA-Datenübertragung mit hierarchischen Codes über einen Mehrwegekanal mit OVSF-Codes entsprechend Fig. 1 und ein Rake-Empfangsverfahren im Empfänger.

Allerdings unterscheidet sich das Rake-Empfangsverfahren wesentlich vom Stand der Technik, da im Rake-Empfänger nicht die vollständige Entspreizung durchgeführt wird, sondern in nachgeschalteten Entspreizern. Im konkreten Beispiel führt der Rake-Empfänger gar keine Entspreizung durch.

Figur 2 zeigt ein Blockdiagramm einer Vorrichtung zur Detektion hierarchisch codierter CDMA-Signale gemäß einer Ausführungsform der vorliegenden Erfindung, und Fig. 3 zeigt eine schematische Darstellung des Aufbaus der Code-Detektoren bei der Ausführungsform der vorliegenden Erfindung nach Fig. 2.

Ein erster Code-Detektor CD1 empfängt das im Chiptakt abgetastete CDMA-Signal CDMA-S. Im ersten Code-Detektor CD1 wird dieses Signal mit den Generator-Codes a, b entspreizt.

Die resultierenden entspreizten Signale s^{(2,1)} und s^{(2,2)} (im halben Chiptakt abgetastet) werden der Leistungsberechnungseinheit LB zugeführt. Die Entscheidungseinheit E entscheidet, daß ein entsprechender Code vorliegt, wenn die berechnete Leistung des zugehörigen entspreizten Signals einen Schwellwert überschreitet.

Der Entscheider E gibt an eine Weitergabeeinrichtung S1, S2 in Form von zwei Schaltern ein entsprechendes Steuersignal zum Weitergeben der entspreizten Signale s^{(2,1)} und s^{(2,2)} an die zweite Stufe (zusammen als CDMA-S' bezeichnet), wenn der jeweilige zugehörige Code vorliegt, anderenfalls nicht.

Es sei also beispielsweise der Code c^{(1,1)} im zu untersuchenden CDMA-Signal CDMA-S enthalten. Dann wird in der ersten Detektorstufe im Code-Detektor CD1 festgestellt, daß der Code c^{(2,1)} nicht vorhanden ist, wohl aber der Code c^{(2,2)}.

An die nächste Stufe wird daher nur Code c^{(2,2)} weitergeleitet. Im nächsten Schritt wird nur noch das entspreizte CDMA-Signal zum Code c^{(2,2)} weiterbearbeitet. Es wird dann festgestellt, ob die Codes c^{(3,3)} und c^{(3,4)} vorhanden sind. Die Untercodes zum Code c^{(2,1)} brauchen nicht mehr überprüft zu werden, da sie nicht vorhanden sein können, wenn c^{(2,1)} nicht vorhanden ist.

Obwohl die vorliegende Erfindung vorstehend anhand eines bevorzugten Ausführungsbeispiels beschrieben wurde, ist sie darauf nicht beschränkt, sondern auf vielfältige Weise modifizierbar.

Insbesondere kann das erfindungsgemäße Verfahren in allen Detektionssystemen angewendet werden, die einen Übertragungsmodus verwenden, der hierarchische CDMA-Codes verwendet.

## Patentansprüche

1. Detektionsverfahren, bei dem ein CDMA-codiertes Datensignal in Form eines Datenstroms von aufgespreizten Datenbursts zwischen einem Sender und einem Empfänger übertragen wird, wobei hierarchische CDMA-Codes zur Übertragung verwendet werden,
**dadurch gekennzeichnet, daß**
i) in einem ersten Schritt Codes mit einem kleineren als einem maximal zu detektierenden Spreizungsfaktor (SF) detektiert werden;
ii) in einem zweiten Schritt Codes mit größerem Spreizungsfaktor als im vorigen Schritt detektiert werden, wobei die Detektionsergebnisse des ersten Schrittes berücksichtigt werden; und
iii) in einem dritten Schritt der Detektionsprozess abgebrochen wird, falls alle Codes detektiert sind, oder anderenfalls der zweite Schritt mit den jeweils zuletzt erhaltenen Detektionsergebnissen solange wiederholt wird, bis alle Codes detektiert sind.

2. Verfahren nach Anspruch 1, **dadurch gekennzeichnet, daß** im ersten Schritt der Muttercode c^{(1,1)} mit dem Spreizungsfaktor 1 detektiert wird.

3. Verfahren nach Anspruch 1, **dadurch gekennzeichnet, daß** nur ein Teil des gesamten Codebaums detektiert wird.

4. Verfahren nach Anspruch 1, 2 oder 3, **dadurch gekennzeichnet, daß** OVSF-Codes detektiert werden.

5. Verfahren nach einem der Ansprüche 1 bis 4, **dadurch gekennzeichnet, daß** das Berücksichtigen des jeweils vorhergehenden Schritts dadurch erfolgt, daß die Leistungen der mit den bereits detektierten Codes entspreizten CDMA-Signale bestimmt werden und nur die entspreizten CDMA-Signale zum nächsten Schritt weitergeleitet werden, welche eine vorbestimmte Leistungsschwelle überschreiten.

6. Vorrichtung zur Durchführung des Verfahrens nach mindestens einem der vorherigen Absprüche, **gekennzeichnet durch** eine Empfangseinrichtung mit:
einer ersten Stufe (CD1) zum Detektieren von Codes mit einem kleineren als einem maximal zu detektierenden Spreizungsfaktor;
einer zweiten Stufe zum Detektieren von Codes mit größerem Spreizungsfaktor als im ersten Schritt;
einer Beurteilungseinrichtung (LB, E) zum Beurteilen, welche zum kleineren Spreizungsfaktor gehörigen Codes in der ersten Stufe detektierbar sind; und
einer Weitergabeeinrichtung (S1, S2) zum Weitergeben der Detektionsergebnisse an die nächste Stufe.

7. Vorrichtung nach Anspruch 6, **dadurch gekennzeichnet, daß** die Beurteilungseinrichtung (LB, E) eine Leistungsbeurteilung durchführt und solche Codes als detektierbar beurteilt, deren Leistung oberhalb eines bestimmten Schwellwertes liegt.

8. Vorrichtung nach Anspruch 6 oder 7, **dadurch gekennzeichnet, daß** die Weitergabeeinrichtung (S1, S2) eine vonder Beurteilungseinrichtung (LB, E) steuerbare Schaltereinrichtung umfaßt.

## Claims

1. Detection method, in which a CDMA-coded data signal is transmitted in the form of a datastream of spread data bursts between a transmitter and a receiver, with hierarchical CDMA codes being used for transmission,
**characterized in that**
i) in a first step, codes with a spread factor (SF) which is less than a maximum spread factor (SF) to be detected are detected;
ii) in a second step, codes with a spread factor which is greater than in the previous step are detected, with the detection results of the first step being taken into account; and
iii) in a third step, the detection process is terminated if all the codes have been detected, or else the second step is repeated with the respectively most recently obtained detection results until all the codes have been detected.

2. Method according to Claim 1, **characterized in that** the master code c^{(1,1)} is detected with the spread factor 1 in the first step.

3. Method according to Claim 1, **characterized in that** only a portion of the entire code tree is detected.

4. Method according to Claim 1, 2 or 3, **characterized in that** OVSF codes are detected.

5. Method according to one of Claims 1 to 4, **characterized in that** the respectively previous step is taken into account by determining the powers of the CDMA signals despread using the already detected codes, and by passing on to the next step only those despread CDMA signals which exceed a predetermined power threshold.

6. Apparatus for carrying out the method according to at least one of the preceding claims, **characterized by** a receiving device having:
a first stage (CD1) for detection of codes whose spread factor is less than a maximum spread factor to be detected;
a second stage for detection of codes whose spread factor is greater than in the first step;
an assessment device (LB, E) for assessing which codes which are associated with the lower spread factor can be detected in the first stage; and
a passing-on device (S1, S2) for passing on the detection results to the next stage.

7. Apparatus according to Claim 6, **characterized in that** the assessment device (LB, E) carries out a power assessment, and assesses those codes whose power is above a specific threshold value as being detectable.

8. Apparatus according to Claim 6 or 7, **characterized in that** the passing-on device (S1, S2) has a switch device which can be controlled by the assessment device (LB, E).

## Revendications

1. Procédé de détection, selon lequel un signal de données codé CDMA est transmis entre un émetteur et un récepteur sous la forme d'un courant de données de rafales de données dispersées, en utilisant des codes CDMA hiérarchiques pour la transmission,
**caractérisé en ce que**
i) dans une première étape, des codes sont détectés avec un facteur de dispersion (SF) inférieur à un facteur de dispersion maximum à détecter ;
ii) dans une deuxième étape, des codes sont détectés avec un facteur de dispersion plus grand que dans l'étape précédente, les résultats de détection de la première étape étant pris en compte ; et
iii) dans une troisième étape, le processus de détection est coupé si tous les codes ont été détectés, ou dans le cas contraire la deuxième étape avec les résultats de détection obtenus respectivement en dernier lieu est répétée jusqu'à la détection de tous les codes.

2. Procédé selon la revendication 1,
**caractérisé en ce que**
dans la première étape, on détecte le code mère c^{(1,1)} avec le facteur de dispersion 1.

3. Procédé selon la revendication 1,
**caractérisé en ce que**
l'on ne détecte qu'une partie de l'arbre de code complet.

4. Procédé selon la revendication 1, 2 ou 3,
**caractérisé en ce qu'**
on détecte des codes OVSF.

5. Procédé selon l'une des revendications 1 à 4,
**caractérisé en ce que**
la prise en compte de l'étape respectivement précédente se fait en déterminant les puissances des signaux CDMA rassemblés avec les codes déjà détectés et en ne transférant vers l'étape suivante que les signaux CDMA rassemblés qui dépassent un seuil de puissance prédéterminé.

6. Dispositif pour la mise en oeuvre du procédé selon au moins l'une des revendications précédentes,
**caractérisé par**
un système de réception comprenant :
un premier étage (CD1) pour détecter des codes avec un facteur de dispersion inférieur à un facteur de dispersion maximum à détecter ;
un deuxième étage pour détecter des codes avec un facteur de dispersion plus grand que dans le premier étage ;
un système d'évaluation (LB, E) pour évaluer quels sont les codes associés au facteur de dispersion plus petit détectés dans le premier étage ; et
un système de transfert (S1, S2) pour transférer les résultats de détection à l'étage suivant.

7. Dispositif selon la revendication 6,
**caractérisé en ce que**
le système d'évaluation (LB, E) réalise une évaluation de puissance et juge détectables ceux des codes dont la puissance est supérieure à une valeur de seuil déterminée.

8. Dispositif selon la revendication 6 ou 7,
**caractérisé en ce que**
le système de transfert (S1, S2) comprend un système de commutateurs commandé par le système d'évaluation (LB, E).
